# EUROPEAN PATENT APPLICATION

(11) **EP 1 176 735 A1**
(43) Date of publication of application: **30.01.2002**
(21) Application number: 01904568.1
(22) Date of filing: 20.02.2001
(51) Int. Cl.: H04B 7/005, H03M 13/23, H04L 27/22

(54) **ADAPTIVE EQUALIZER AND ADAPTIVE EQUALIZING METHOD**

(30) Priority: 03.03.2000 JP 2000059517; 10.04.2000 JP 2000108318
(71) Applicant: MATSUSHITA ELECTRIC INDUSTRIAL CO., LTD., Kadoma-shi, Osaka 571-8501 (JP)
(72) Inventor: AIZAWA, Junichi, Yokohama-shi, Kanagawa 240-0033 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0101200
(87) International publication number: WO0165723

(57) **Abstract**

A training section 102 calculates a tap coefficient, an impulse response calculation section 103 calculates a impulse response of the tap coefficient, a tap selection section 104 selects a tap based on the size of the impulse response, and a replica generating section 105 generates a replica by multiplying a symbol for replica generation by the tap coefficient at the selected tap only. Also, the replica generating section 105 performs generation so as not to duplicate identical replicas in accordance with control by a control section 106.

## Description

### Technical Field

The present invention relates to an adaptive equalization apparatus and adaptive equalization method for use by a radio receiving apparatus in a mobile communication system, or the like.

### Background Art

With the advent of the information society, high-speed data transmission is also demanded in mobile communications. In radio communications at data transmission rates of several Mbps, multipath propagation occurs which is conducive to degradation of communication quality. In order to overcome this problem, radio receiving apparatuses are equipped with an adaptive equalization apparatus.

One kind of adaptive equalization apparatus is a Maximum Likelihood Sequence Estimation (hereinafter referred to as "MLSE") adaptive equalization apparatus that uses a Viterbi algorithm. An MLSE adaptive equalization apparatus using a Viterbi algorithm generates candidates (replicas) of received signals by complex multiplication of all symbol patterns that can be used in the delay time subject to compensation by a weighting coefficient (hereinafter referred to as "tap coefficient") calculated from an estimated propagation path characteristic. Then these replicas and the actual received signals are compared, and the sequence with the smallest inter-signal distance (metric) is determined to be the transmitted data.

However, in an above-described conventional MLSE adaptive equalization apparatus, as the length of the delay time subject to compensation and the modulation level increase, the number of replicas generated by complex multiplication grows exponentially, and therefore the amount of computation and the scale of the apparatus also increase. Consequently, with an above-described MLSE adaptive equalization apparatus, as the length of the delay time subject to compensation and the modulation level increase, there are great difficulties in implementation when actual hardware design is considered.

### Disclosure of Invention

It is an objective of the present invention to provide an adaptive equalization apparatus and adaptive equalization method in which the amount of computation and the scale of the apparatus are small, and which enable actual implementation as hardware even when the length of the delay time subject to compensation and the modulation level are large.

The present inventors arrived at the present invention through perceiving that a plurality of identical replicas are generated by not performing complex multiplication at a specific tap, and discovering that it is possible to greatly reduce the amount of computation in adaptive equalization processing by repeatedly using this identical replica. Further, in arriving at the present invention, the present inventors found that adaptive equalization processing capability is fully maintained even though the number of generated replicas is decreased.

Thus, to achieve the above-stated purpose, the present invention greatly reduces the amount of computation in replica generation by repeatedly using a generated replica without performing complex multiplication at a specific tap.

### Brief Description of Drawings

FIG.1 is a main block diagram showing a schematic configuration of an adaptive equalization apparatus according to Embodiment 1 of the present invention;
FIG.2 is a main block diagram showing a schematic configuration of the replica generating section provided in an adaptive equalization apparatus according to Embodiment 1 of the present invention;
FIG.3 is a chart showing impulse responses found by the impulse response calculating section provided in an adaptive equalization apparatus according to Embodiment 1 of the present invention;
FIG.4 is a trellis diagram for explaining the operation when the third tap has not been selected in an adaptive equalization apparatus according to Embodiment 1 of the present invention;
FIG.5 is a graph in which the reception characteristic of an adaptive equalization apparatus according to Embodiment 1 of the present invention and the reception characteristics of adaptive equalization apparatuses using other methods are measured by simulation;
FIG.6 is a main block diagram showing a schematic configuration of an adaptive equalization apparatus according to Embodiment 2 of the present invention;
FIG.7 is a trellis diagram for explaining the operation when the first tap has not been selected in an adaptive equalization apparatus according to Embodiment 2 of the present invention;
FIG.8 is a trellis diagram for explaining the operation when the last tap has not been selected in an adaptive equalization apparatus according to Embodiment 3 of the present invention;
FIG.9A is a chart showing impulse responses found by the impulse response calculating section provided in an adaptive equalization apparatus according to Embodiment 4 of the present invention;
FIG.9B is a chart showing impulse responses found by the impulse response calculating section provided in an adaptive equalization apparatus according to Embodiment 4 of the present invention;
FIG.10 is a main block diagram showing a schematic configuration of an adaptive equalization apparatus according to Embodiment 5 of the present invention; and
FIG.11 is a main block diagram showing a schematic configuration of an adaptive equalization apparatus according to Embodiment 6 of the present invention.

### Best Mode for Carrying out the Invention

With reference now to the attached drawings, embodiments of the present invention will be explained in detail below.

In the following descriptions, it is assumed that signals transmitted from a communication partner are modulated by BPSK (Binary Phase Shift Keying), but the present invention is not limited to this and can also be applied to a radio communication system using a different modulation method, such as QPSK (Quadri Phase Shift Keying), for example.

Also, in the following descriptions, the case where the number of taps is four (that is, the number of states is eight) is taken by way of example, but the present invention is not limited to this and can also be applied to cases where the number of taps is changed according to various conditions.

### (Embodiment 1)

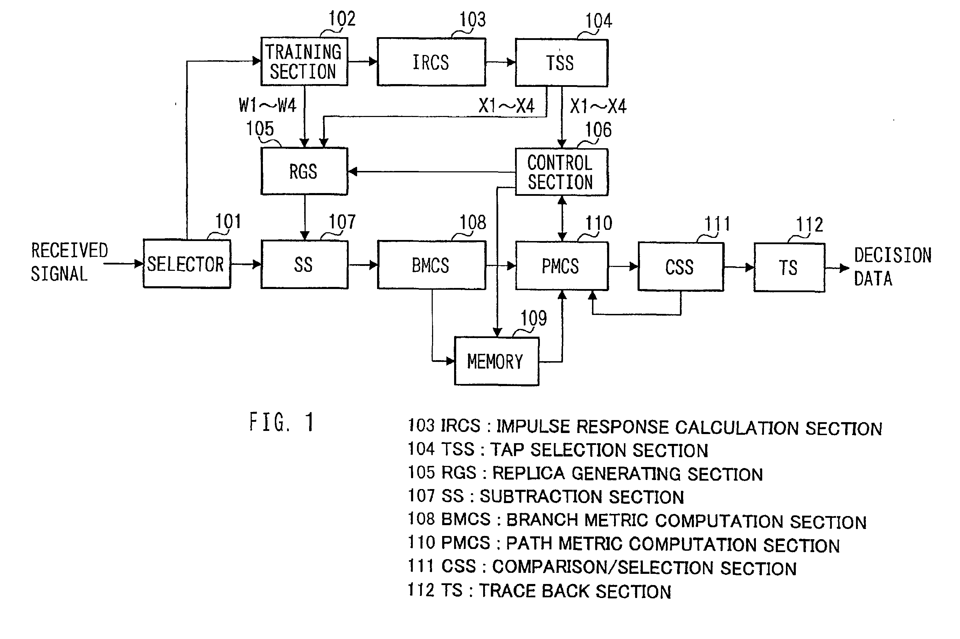

FIG.1 is a main block diagram showing a schematic configuration of an adaptive equalization apparatus according to Embodiment 1 of the present invention. In the adaptive equalization apparatus shown in FIG.1, a selector 101 switches and selects a known training signal inserted at a predetermined place in a received signal and a signal of the data part of a received signal (hereinafter referred to as "data signal") at predetermined timing, and outputs the training signal to a training section 102, and the data signal to a subtraction section 107.

Using the training signal, the training section 102 estimates the propagation path characteristic in accordance with a predetermined algorithm such as an LMS (Least Mean Square) algorithm or RLS (Recursive Least Squares) algorithm, and finds a tap coefficient W1 to W4 that is a weighting coefficient indicating the propagation path characteristic. An impulse response calculation section 103 finds the tap coefficient power value (impulse response). Based on the size of the impulse response, a tap selection section 104 selects a tap to be multiplied by the tap coefficient in a replica generating section 105 (described later). The replica generating section 105 performs multiplication by the tap coefficient found by a training section 102 only at the tap selected by the tap selection section 104 in accordance with control from a control section 106, and generates a replica. Details of this replica generating section 105 will be given later.

The control section 106 performs replica generating section 105 operation/stoppage control and memory 109 output control. The subtraction section 107 calculates the error between a data signal and replica and outputs an error signal. A branch metric computation section 108 finds a branch metric using the error signal output from the subtraction section 107.

One branch metric calculation method is, for example, to use the error signal power value as the branch metric, but there are no particular restrictions on the branch metric calculation method.

The memory 109 stores the branch metric found by the branch metric computation section 108. A path metric computation section 110 adds the branch metric found by the branch metric computation section 108 or the branch metric stored in the memory 109 to a past branch metric cumulative value (path metric ), to find a new path metric . A comparison/selection section 111 compares the path metrics found by the path metric computation section 110 for each path in all states. Then the comparison/selection section 111 selects the path metric with the smaller value and makes the path that has that path metric the survival path. At a predetermined timing, a trace-back section 112 selects the path with the smallest path metric from among the survival paths of each state, and obtains decision data by performing trace-back of that selected path.

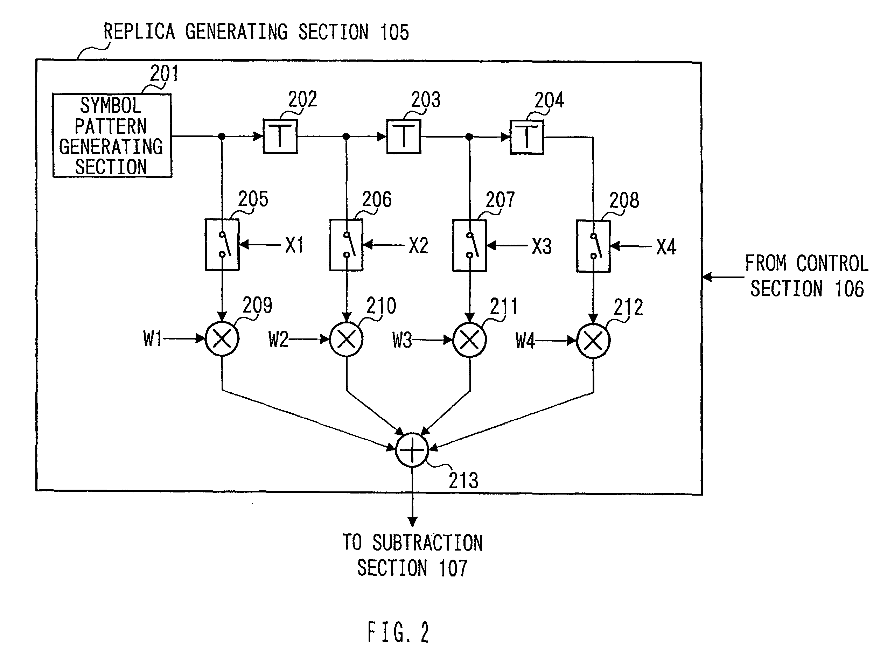

Next, the configuration of the replica generating section 105 will be described. FIG.2 is a main block diagram showing a schematic configuration of the replica generating section provided in an adaptive equalization apparatus according to Embodiment 1 of the present invention. In the replica generating section 105 shown in FIG.2, a symbol pattern generating section 201 generates a symbol sequence for creating all symbol patterns that can be used in the delay time subject to compensation. For example, when the delay time of three symbol time is made subject to compensation in BPSK modulation, there are 16 symbol patterns: 0000, 0001, 0010, 0011, 0100, 0101, 0110, 0111, 1000, 1001, 1010, 1011, 1100, 1101, 1110, and 1111.

Delayer 202 to 204 delay each symbol in the respective symbol patterns one symbol time at a time. Switches 205 to 208 are subjected to connection/disconnection control by selection signals X1 to X4 output from the tap selection section 104. Multiplier 209 multiplies a symbol with no delay by tap coefficient W1. Multiplier 210 multiplies a symbol delayed by a one symbol time by tap coefficient W2. Similarly, multiplier 211 multiplies a symbol delayed by a two symbol time by tap coefficient W3, and multiplier 212 multiplies a symbol delayed by a three symbol time by tap coefficient W4.

An adder 213 adds the four symbols multiplied by the respective tapcoefficients. By this means, a replica is generated. The replica generating section 105 operates intermittently in accordance with operation/stoppage control by the control section 106.

Next, the operation of an adaptive equalization apparatus that has the above-described configuration will be described. From among received signals input to an adaptive equalization apparatus every predetermined unit (for example, every slot), a training signal is selected by the selector 101 and output to the training section 102. A data signal is output to the subtraction section 107 one symbol at a time.

Then, in the training section 102, tap coefficients W1 to W4 are found using the training signal, and are output to the impulse response calculation section 103 and replica generating section 105.

In the impulse response calculation section 103, the power values of tap coefficients W1 to W4 (impulse responses I1 to I4) are found, and are output to the tap selection section 104. In the tap selection section 104, a tap at which the tap coefficient is multiplied is selected based on the size of the impulse response. An example of the actual tap selection procedure is described below.

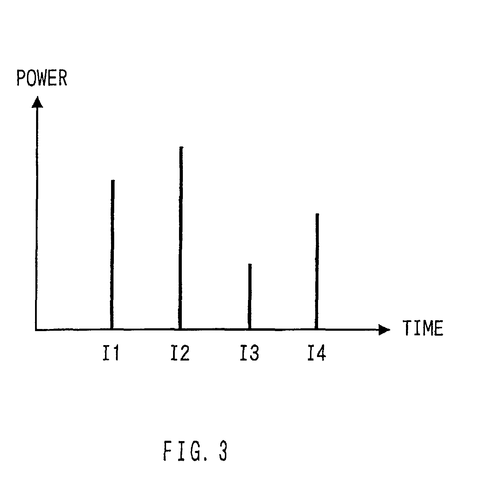

FIG.3 is a chart showing impulse responses found by the impulse response calculating section provided in an adaptive equalization apparatus according to Embodiment 1 of the present invention. Now assume that the sizes of impulse responses I1 to I4 found by the impulse response calculation section 103 are as shown in FIG.3.

In the tap selection section 104, up to a predetermined number (assumed to be three here) of impulse responses I1 to I4 are selected in order starting with the largest impulse response. Thus, in this case, I1, I2, and I4 are selected. In the tap selection section 104, selection signals X1 to X4 are generated according to the selected impulse responses. That is to say, selection signals X1, X2, and X4 are generated, and are output to the replica generating section 105 and control section 106.

In the replica generating section 105, connection/disconnection of switches 205 to 208 is controlled by the output selection signals . That is, only switches for which a selection signal is output are connected. Here, therefore, switches 205, 206, and 208 are connected, and switch 207 is disconnected. As a result, in the replica generating section 105, a non-delay symbol and tap coefficient W1 are multiplied by multiplier 209 at the first tap, a symbol delayed by a one symbol time and tap coefficient W2 are multiplied by multiplier 210 at the second tap, and a symbol delayed by a three symbol time and tap coefficient W4 are multiplied by multiplier 212 at the fourth tap. As switch 207 is in the disconnected state, a symbol delayed by a two symbol time is not output to multiplier 211. Therefore, multiplication is not performed by multiplier 211.

Thus, only signals output from the first tap, second tap, and fourth tap multipliers are added by the adder 213, and replicas is generated from these signals. In other words, the replica generating section 105 generates the replicas without using the signal output from the third tap. As a result, the number of complex multiplications can be reduced by one in each replica generation operation by the replica generating section 105. Also, by reducing the number of selection taps to be set in the tap selection section 104, it is possible to greatly reduce the number of complex multiplications in each replica generation operation. The appropriate number of selection taps is determined by simulation, etc., suitable for the level at which the desired reception characteristic is obtained.

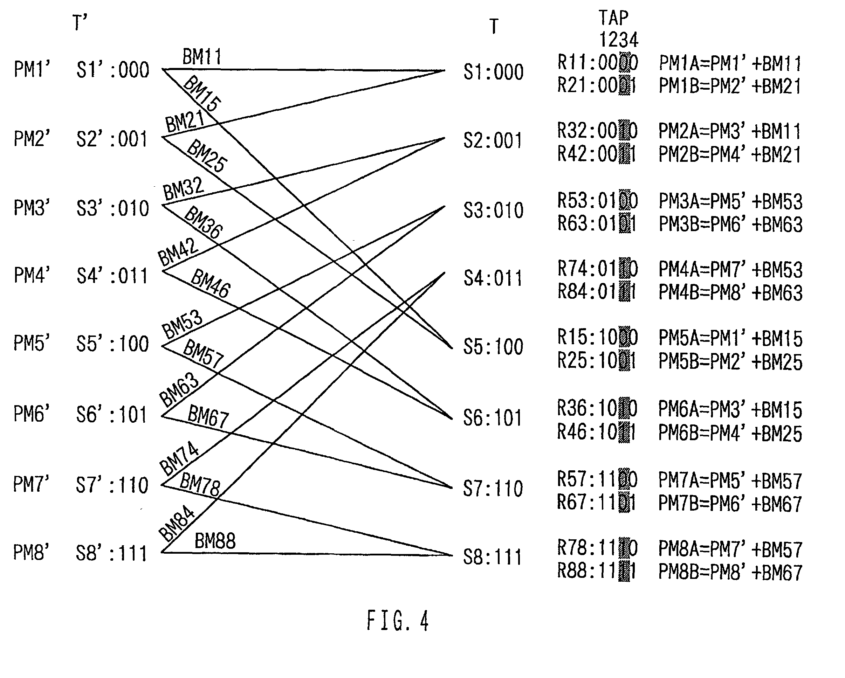

Hereinafter, operation will be described for the case where the third tap has not been selected in an adaptive equalization apparatus according to Embodiment 1 of the present invention. FIG.4 is a trellis diagram for explaining the operation when the third tap has not been selected in an adaptive equalization apparatus according to Embodiment 1 of the present invention.

States (hereinafter referred to as "S") 1' (000) to S8' (111) at control timing T' immediately preceding the present control timing T in the replica generating section 105 transit to S1 (000) to S8 (111) at the present control timing T as shown by the trellis diagram in FIG.4. In the process of this transition, the replica generating section 105 generates replica (hereinafter referred to as "R") 11 to R88 using signals output from each tap. Here, for example, R11 indicates the replica generated in the process of a transition from S1' to S1.

Here, when the third tap has not been selected in the replica generating section 105, only the first tap, second tap, and fourth tap signals are added in the adding section 213, and replicas are generated. That is, each of replicas R11 to R88 is generated without using the third tap signal indicated by hatching in FIG.4. As can be seen from FIG.4, when the third tap signal is not used, R11 and R32 are the same. Similarly, R21 and R42, R53 and R74, R63 and R84, R15 and R36, R25 and R46, R57 and R78, and R67 and R88, are the same.

For replicas that are the same, the error signal found by the subtraction section 107 is also the same, and therefore the values of branch metric (hereinafter referred to as "BM") 11 to BM88 calculated by the branch metric computation section 108 are also the same. To be specific, in FIG.4, BM11 and BM32, BM21 and BM42, BM53 and BM74, BM63 and BM84, BM15 and BM36, BM25 and BM46, BM57 and BM78, and BM67 and BM88, have the same values. Here, for example, BM11 indicates the branch metric calculated in the process of a transition from S1' (000) to S1 (000).

Since the branch metric value is also the same for replicas that are the same, as explained above, it is not necessary to generate a plurality of replicas that are the same. Thus, when selection signals X1, X2, and X4 are output from the tap selection section 104 (that is, when the third tap has not been selected), the control section 106 judges that the relationship between replicas and branch metrics is as described above, and performs replica generating section 105 operation/stoppage control and memory 109 output control. To be specific, control is performed, and replicas, branch metrics, and path metrics calculated, as described below. In the following description, paths to states S1 and S2 are considered for purposes of illustration.

First, R11 is generated by the replica generating section 105 and is output to the subtraction section 107. When a replica is output from the replica generating section 105, the error between the data signal and R11 is calculated by the subtraction section 107 and an error signal is output to the branch metric computation section 108. When an error signal is output from the subtraction section 107, BM11 is calculated by the branch metric computation section 108 using the error signal. Then the value of BM11 and a number indicating the path for which BM11 was found (that is, the path from state S1' to state S1) are output to the memory 109 and path metric computation section 110. By this means, BM11 and the BM11 path number are stored in the memory 109.

Next, as shown in FIG.4, path metric (hereinafter referred to as "PM") 1' of the survival path in state S1' and BM1 are added by the path metric computation section 110, and PM1A, one of the new path metrics in state S1, is calculated. The calculated PM1A is output to the comparison/selection section 111. At the point at which PM1A is calculated, the path metric computation section 110 outputs a signal indicating that PM1A calculation has finished to the control section 106.

Based on the kind of relationship shown in FIG.4, the control section 106 can judge at which paths replica and branch metric values are the same according to the selected tap. Thus, when a signal indicating that PM1A calculation has finished is output, the control section 106 judges whether or not replica R21 to be generated next by the replica generating section 105 is the same as a replica that has already been generated (here, R11).

When the third tap has not been selected by the tap selection section 104, R21 is not the same as R11, and so in this case the control section 106 outputs to the replica generating section 105 a signal that causes operation of the replica generating section 105. As a result, by means of the same kind of operations as described above, R21, BM21, and PM1B, the other new path metric in state S1, are calculated. Also, BM21 and a number indicating the path of BM21 (that is, the path from state S2' to state S1) are stored on the memory 109. Then, at the point at which PM1B is calculated, the path metric computation section 110 outputs a signal indicating that PM1B calculation has finished to the control section 106.

When a signal indicating that PM1B calculation has finished is output, the control section 106 judges whether or not replica R32 to be generated next by the replica generating section 105 is the same as a replica that has already been generated (here, R11 or R21). As shown in FIG.4, R32 is the same as R11, and therefore in this case the control section 106 outputs to the replica generating section 105 a signal halting operation of the replica generating section 105. Since a replica is not output from the replica generating section 105 in this case, calculation of branch metric BM32 is not performed by the branch metric computation section 108.

In this case, also, the control section 106 determines the branch metric (that is, BM11) that has the same value as BM32, reads BM11 from the memory 109 and outputs it to the path metric computation section 110, and also outputs to the path metric computation section 110 a number indicating the BM32 path (that is, the path from state S3' to state S2).

At this time, as shown in FIG.4, the path metric computation section 110 calculates one new path metric in state S2, PM2A, using BM11 output from the memory 109 instead of BM32 and the path number of BM32 output from the control section 106. The calculated PM2A is output to the comparison/selection section 111. At the point at which PM2A is calculated, the path metric computation section 110 outputs a signal indicating that PM2A calculation has finished to the control section 106.

When a signal indicating that PM2A calculation has finished is output, the control section 106 judges whether or not replica R42 to be generated next by the replica generating section 105 is the same as a replica that has already been generated (here, R11 or R21). As shown in FIG.4, R42 is the same as R21, and therefore in this case the control section 106 outputs to the replica generating section 105 a signal halting operation of the replica generating section 105. The control section 106 also determines the branch metric (that is, BM21) that has the same value as BM42, reads BM21 from the memory 109 and outputs it to the path metric computation section 110, and also outputs to the path metric computation section 110 a number indicating the BM42 path (that is, the path from state S4' to state S2).

By this means, as shown in FIG.4, the path metric computation section 110 calculates the other new path metric in state S2, PM2B, using BM21 output from the memory 109 instead of BM42 and the path number of BM42 output from the control section 106. The calculated PM2B is output to the comparison/selection section 111. Subsequently, similar operations are repeated for all paths (here, 16 paths).

When path metrics have been calculated for all paths (the 16 path metrics PM1A to PM8B), the comparison/selection section 111 compares each of PM1A and PM1B, PM2A and PM2B, PM3A and PM3B, PM4A and PM4B, PM5A and PM5B, PM6A and PM6B, PM7A and PM7B, and PM8A and PM8B. Then the path with the smaller path metric value is selected by the comparison/selection section 111 as the survival path in states S1 to S8, and the state number and the path metric of the survival path are output to the path metric computation section 110. Also, state numbers and path numbers are output to the trace-back section 112. State numbers and path numbers are held in the trace-back section 112 as a sequential time series until a predetermined timing is reached.

Then, at the predetermined timing, the path with the smallest path metric among the survival paths of each state is selected by the trace-back section 112, and decision data is obtained by trace-back of that selected path.

When replica generating section 105 operation/stoppage control and memory 109 output control are performed by the control section 106, as described above, the number of replicas generated by the replica generating section 105 can be greatly reduced compared with the case where all replicas are generated. Also, as a result of reducing the number of generated replicas, the number of complex multiplications carried out by the replica generating section 105 is also greatly decreased. This is illustrated in concrete terms below.

Consider, as an example, a case in which a received signal is a BPSK modulated signal, and the replica generating section 105 consists of four taps as described above. If tap selection is not performed and complex multiplications are performed for all the taps, the number of replicas generated will be 16 (2⁴). Also, since complex multiplications are performed at each of the four taps when all replicas are generated, the number of complex multiplications performed will be 64 (16 x 4 taps).

If, on the other hand, complex multiplications are not performed for one or other of the four taps, as in this embodiment, operation of the replica generating section 105 is halted by means of the kind of control described above, and so the number of generated replicas will be 8 (2³). Also, since complex multiplications are performed at each of three taps when eight replicas are generated, the number of complex multiplications performed will be 24 (8 x 3 taps).

Further, if a received signal is a QPSK modulated signal, and tap selection is not performed and complex multiplications are performed for all the taps , the number of replicas generated will be 256 (4⁴). Also, since complex multiplications are performed at each of the four taps when all replicas are generated, the number of complex multiplications performed will be 1024 (256 x 4 taps).

If, on the other hand, complex multiplications are not performed for one or other of the four taps, as in this embodiment, the number of generated replicas will be 64 (4³). Also, since complex multiplications are performed at each of three taps when 64 replicas are generated, the number of complex multiplications performed will be 192 (64 x 3 taps).

Thus, the greater the modulation level, the greater is the effect in reducing the number of complex multiplications by not selecting a specific tap.

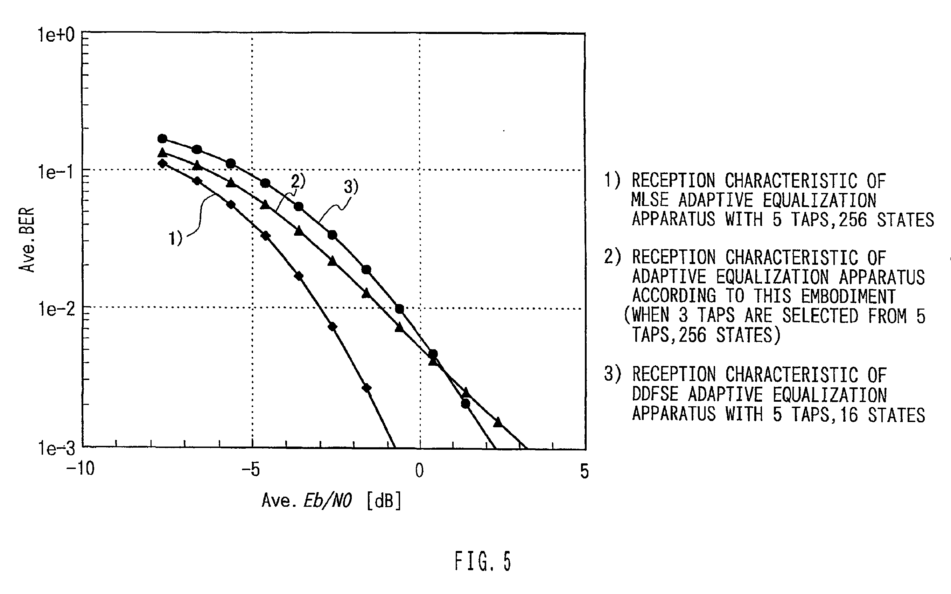

Next, descriptions will be given concerning reception characteristics and amount of computation when adaptive equalization processing is carried out using an adaptive equalization apparatus according to this embodiment. FIG.5 is a graph in which the reception characteristic of an adaptive equalization apparatus according to Embodiment 1 of the present invention and the reception characteristics of other adaptive equalization apparatuses are measured by simulation.

FIG.5 shows 1) the reception characteristic of an adaptive equalization apparatus that has 5 taps and 256 states, 2) the reception characteristic of an adaptive equalization apparatus according to this embodiment (for the case where the top three taps in order of size of impulse response are always selected among 5 taps and 256 states), and 3) the reception characteristic of a DDFSE adaptive equalization apparatus that has 5 taps and 16 states. In this simulation, the signal modulation method is assumed to be QPSK.

Here, as described in "Waveform Equalization Technique for Digital Mobile Communications", edited by Jun Horikoshi, TRICEPS Corp., pp.91 (1996), DDFSE (Delayed Decision Feedback Sequence Estimation) is a method whereby a section 0 to L receiving inter-code interference is divided into two sections, 0 to L' and L'+1 to L (where L is the number of taps), inter-code interference from 0 to L' is compensated for by means of a Maximum Likelihood Sequence Estimation Viterbi algorithm, and inter-code interference from L'+1 to L is compensated for by decision feedback. By this means, it is possible to reduce the number of Viterbi algorithm states from M^{L} (where M is the modulation level) to M^{L'}, and to decrease the amount of computation. As the amount of additional processing necessary in the decision feedback section is small compared with Viterbi algorithm related computational processing, overall computation can be simplified.

As can be seen from the simulation results in FIG.5, the reception characteristic is best when using the adaptive equalization apparatus in case 1). However, with the adaptive equalization apparatus in case 1), complex multiplications are performed on all symbol patterns and tap coefficients that can be used in the delay time subject to compensation (here, a four symbol time), for all taps (here, five taps). Therefore, with the adaptive equalization apparatus in case 1), the amount of computation and scale of the apparatus are large, and there are great difficulties in implementation when actual hardware design is considered.

Now when the implementable adaptive equalization apparatus according to this embodiment in case 2) and DDFSE adaptive equalization apparatus in case 3) are compared, as can be seen from FIG.5, the adaptive equalization apparatus according to this embodiment has an excellent reception characteristic over virtually the entire region.

Moreover, finding the amount of logical computation for each adaptive equalization apparatus gives the figures shown in Table 1 below. Table 1 shows a comparison of the amount of computation in an adaptive equalization apparatus according to Embodiment 1 of the present invention with the amount of computation in the other adaptive equalization apparatuses. In Table 1, the amounts of computation in each adaptive equalization apparatus are compared taking the amount of computation in the DDFSE adaptive equalization apparatus in case 1) as 1. "Amount of computation" here includes the total amount of computation required in adaptive equalization processing, such as the amount of complex multiplication in replica generation, the amount of branch metric computation, the amount of path metric computation, the amount of computation relating to path metric comparison, and so forth.

| | Amount of Computation |
|---|---|
| 1) | 16 |
| 2) | 0.84 |
| 3) | 1 |

As can be seen from this table, the amount of computation in the adaptive equalization apparatus according to this embodiment in case 2) is the smallest, being 0.84 times the amount of computation of the DDFSE adaptive equalization apparatus in case 3).

From the above results it can be confirmed that the adaptive equalization apparatus according to this embodiment in case 2) is superior to the DDFSE adaptive equalization apparatus in case 3) in terms of both reception characteristic and amount of computation.

Thus, according to an adaptive equalization apparatus and adaptive equalization method of this embodiment, complex multiplications are not performed at a specific tap, making it possible to calculate a plurality of replicas that are identical. Consequently, according to an adaptive equalization apparatus and adaptive equalization method of this embodiment, replicas that are identical are not generated in duplicate fashion, and therefore the amount of complex multiplication in replica generation can be greatly reduced.

Also, according to an adaptive equalization apparatus and adaptive equalization method of this embodiment, the reception characteristic can be improved over that of a DDFSE adaptive equalization apparatus even though the number of replicas generated is reduced. Consequently, according to an adaptive equalization apparatus and adaptive equalization method of this embodiment, it is possible to realize as hardware an adaptive equalization apparatus which is excellent in terms of both amount of computation and reception characteristic in comparison with a DDFSE adaptive equalization apparatus.

Moreover, according to an adaptive equalization apparatus and adaptive equalization method of this embodiment, taps to be selected are determined based on the size of the impulse response, and therefore it is possible to select the optimum taps most appropriately according to channel conditions. By this means, it is possible to improve the reception characteristic.

### (Embodiment 2)

When the first tap is not selected or a plurality of taps are not selected successively from the first tap onward in the replica generating section, an adaptive equalization apparatus according to Embodiment 2 of the present invention determines path metrics that have the same value and does not perform duplicate calculations of these path metrics that have the same value, and also does not perform duplicate compare/select operations carried out based on these path metrics that have the same value.

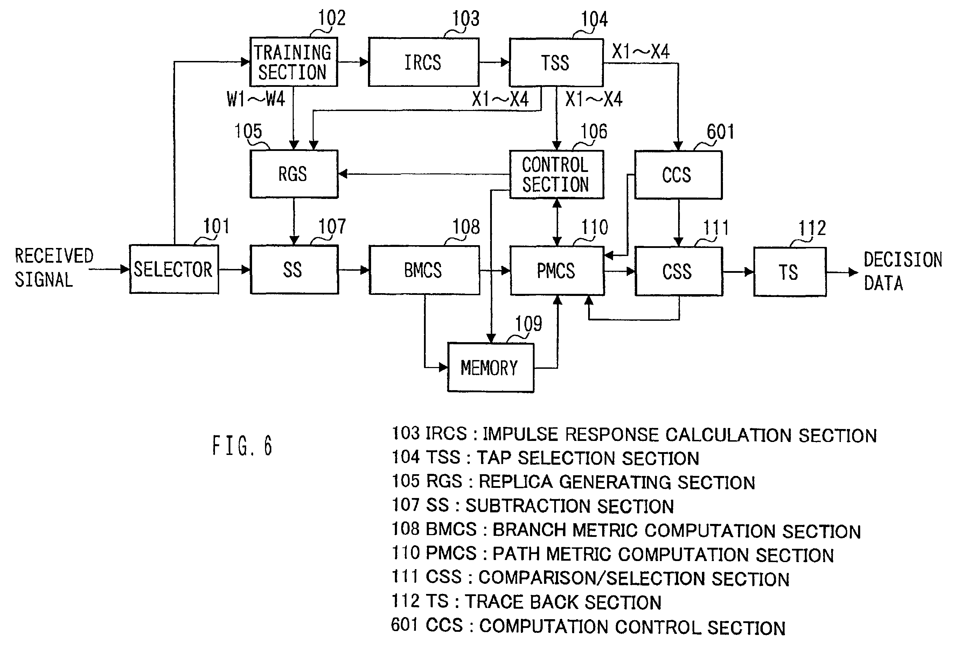

FIG.6 is a main block diagram showing a schematic configuration of an adaptive equalization apparatus according to Embodiment 2 of the present invention. The parts in FIG.6 identical to those in the adaptive equalization apparatus according to Embodiment 1 shown in FIG.1 are assigned the same codes as in FIG.1 and their detailed explanations are omitted.

If it is determined that the first tap (that is, the first tap in the replica generating section 105) has not been selected based on selection signals X1 to X4, a computation control section 601 halts duplicated path metric computational processing in the path metric computation section 110 and duplicated compare/select operations in the comparison/selection section 111. The first tap is the tap for which a symbol with no delay is output in the replica generating section 105.

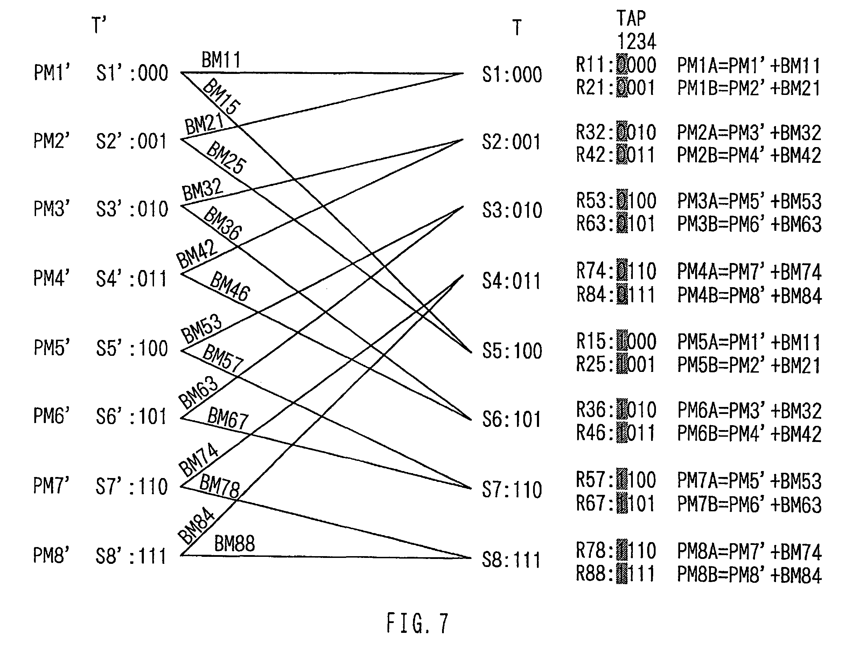

Next, the operation of an adaptive equalization apparatus that has the above-described configuration will be described. FIG.7 is a trellis diagram for explaining the operation when the first tap has not been selected in an adaptive equalization apparatus according to Embodiment 2 of the present invention. In the following description, paths to states S1 and S5 are considered for purposes of illustration.

As shown in FIG.7, when the first tap is not selected in the replica generating section 105 (that is, when replicas are generated without using the first tap signal, indicated by hatching in FIG.7), R11 and R15, and R21 and R25, are the same. Therefore, BM11 and BM15, and BM21 and BM25, have the same values.

When BM11 and BM15 have the same value, PM1A and PM5A have the same value. Also, when BM21 and BM25 have the same value, PM1B and PM5B have the same value. Moreover, since PM1A and PM5A have the same value and PM1B and PM5B have the same value, the result of a comparison of PM1A and PM1B in S1 is the same as the result of a comparison of PM5A and PMSB in S5. Thus, the S1 comparison/selection result can be used directly in S5, and therefore it is no longer necessary to perform computation of PM5A and PM5B or comparison/selection of PM5A and PM5B.

Thus, when selection signal X1 is not output from the tap selection section 104, the computation control section 601 judges the path metrics to be the same, and halts duplicated path metric computational processing in the path metric computation section 110 and duplicated compare/select operations in the comparison/selection section 111. To be specific, the computation control section 601 outputs to the path metric computation section 110 a control signal that performs control so that a path metric is not computed for state S5. Also, the computation control section 601 outputs to the comparison/selection section 111 a control signal that performs control so that path metric comparison/selection is not performed for state S5.

When these control signals are output, the path metric computation section 110 does not calculate PM5A and PM5B in state S5 anew, but uses the already calculated PM1A as PM5A and the already calculated PM1B as PM5B. Also, at this time, the path metric computation section 110 does not output a path metric to the comparison/selection section 111. The comparison/selection section 111 does not perform comparison/selection of PM5A and PM5B in state S5 anew, but uses the result of already performed state S1 comparison/selection processing directly as the comparison/selection result for state S5. That is to say, when the BM11 path is the survival path in state S1, the BM15 path becomes the survival path in state S5. The kinds of operation described above are also performed in a similar way for states S2 and S6, states S3 and S7, and states S4 and S8.

As a result of the path metric computation section 110 andcomparison/selection section 111 being controlled in this way when the first tap is not selected, when a received signal is BPSK modulated, the number of path metric computations and the number of path metric compare/select operations can be cut to one half of the number required when complex multiplications are performed for all taps. Moreover, when a received signal is QPSK modulated, the number of path metric computations and the number of path metric compare/select operations can be cut to one fourth of the number required when complex multiplications are performed for all taps.

When two taps in succession are not selected starting from the first tap (that is, when the first tap and second tap are not selected in the replica generating section 105), the situation is as follows.

To consider states S1, S3, S5, and S7 in FIG.7, as two taps in succession are not selected starting from the first tap, R11, R53, R15, and R57 are the same. Also, R21, R63, R25, and R67 are the same. Therefore, BM11, BM53, BM15, and BM57 have the same value, and BM21, BM63, BM25, and BM67 have the same value.

Also, since two taps in succession starting from the first tap have also not been selected at control timing T' immediately preceding the current control timing T, path metric PM1' of the survival path in state S1' and path metric PM5' of the survival path in state S5' have the same value. Similarly, path metric PM2' of the survival path in state S2' and path metric PM6' of the survival path in state S6' have the same value.

Thus, at current control timing T, PM1A, PM3A, PM5A, and PM7A have the same value, and PM1B, PM3B, PM5B, and PM7B have the same value. Consequently, the S1 path metric comparison result is the same as the S3, S5, and S7 path metric comparison results. In S3, S5, and S7, therefore, the S1 comparison/selection result can be used directly, and it is no longer necessary to perform path metric computation or path metric comparison/selection. The same applies to state S2 and states S4, S6, and S8.

Thus, if two taps in succession are not selected starting from the first tap, when a received signal is BPSK modulated, the number of path metric computations and the number of path metric compare/select operations can be cut to one fourth of the number required when complex multiplications are performed for all taps. Moreover, when a received signal is QPSK modulated, the number of path metric computations and the number of path metric compare/select operations can be cut to one sixteenth of the number required when complex multiplications are performed for all taps.

That is to say, if n taps in succession starting from the first tap are not selected in the replica generating section 105, when a received signal is BPSK modulated, the number of path metric computations and the number of path metric compare/select operations can be cut to 1/2ⁿ of the number required when complex multiplications are performed for all taps, and when a received signal is QPSK modulated, the number of path metric computations and the number of path metric compare/select operations can be cut to 1/4ⁿ of the number required when complex multiplications are performed for all taps.

When n taps in succession starting from the first tap are not selected in the replica generating section 105 in this way, also, the computation control section 601 controls the path metric computation section 110 and comparison/selection section 111 by means of the same kinds of operations as described above.

Thus, according to an adaptive equalization apparatus and adaptive equalization method of this embodiment, when the first tap is not selected or a plurality of taps in succession starting from the first tap are not selected in the replica generating section, there are judged to be path metrics with the same value, those path metrics with the same value are not calculated in duplicate, and duplicated compare/select operations are not performed based on those path metrics with the same value. As a result, it is possible to reduce the amount of computation relating to path metric calculation and the amount of computation relating to path metric comparison/selection. Consequently, according to an adaptive equalization apparatus and adaptive equalization method of this embodiment, the amount of computation in adaptive equalization processing can be further reduced compared with Embodiment 1.

### (Embodiment 3)

In an adaptive equalization apparatus according to Embodiment 3 of the present invention, if the last tap is not selected or if a plurality of taps in succession from the last tap are not selected in the replica generating section, comparison/selection is performed using the path metric of the survival path at the control timing immediately preceding the current control timing and a new survival path is found, after which a path metric at the current control timing for that new survival path is found.

The configuration of an adaptive equalization apparatus according to this embodiment is identical to that configuration of the adaptive equalization apparatus of Embodiment 2 shown in FIG. 6, and therefore the adaptive equalization apparatus according to this embodiment will be described using FIG.6.

If it is determined that the last tap (that is, the fourth tap in the replica generating section 105) has not been selected based on selection signals X1 to X4, the computation control section 601 controls the operation of the path metric computation section 110 and comparison/selection section 111 so that the path metric of the survival path is found after the survival path has been selected by comparison/selection processing. The last tap is the tap for which the symbol with the greatest delay is output in the replica generating section 105.

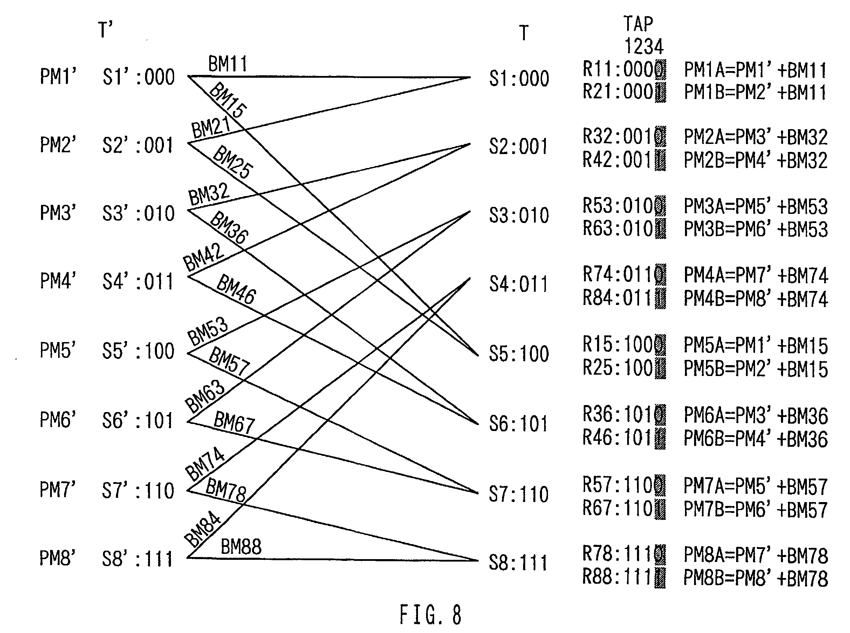

Next, the operation of an adaptive equalization apparatus that has the above-described configuration will be described. FIG.8 is a trellis diagram for explaining the operation when the last tap has not been selected in an adaptive equalization apparatus according to Embodiment 3 of the present invention. In the following description, paths to state S1 are considered for purposes of illustration.

As shown in FIG.8, when the last tap is not selected in the replica generating section 105 (that is, when replicas are generated without using the fourth tap signal, indicated by hatching in FIG. 8), R11 and R21 are the same. Therefore, BM11 and BM21 have the same value.

When BM11 and BM21 have the same value, the result of comparison/selection of PM1A and PM1B in state S1 is the same as the result of comparison/selection of path metric PM1' of the survival path in state S1' and path metric PM2' of the survival path in state S2'.

Now, when complex multiplications are performed for all taps, BM11 and BM21 have different values. Therefore, in state S1, after PM1A is found by adding PM1' and BM11, and PM1B is found by adding PM2' and BM21, the path metric of the survival path must be found by performing comparison/selection of PM1A and PM1B.

When, on the other hand, the last tap is not selected in the replica generating section 105, the result of comparison/selection of PM1A and PM1B is the same as the result of comparison/selection of path metric PM1' and PM2', as explained above. Therefore, in state S1, if comparison/selection is first performed using PM1' and PM2', and then the branch metric of one or other of the paths to state S1 (BM11 or BM21) is added to the path metric of the survival path (PM1' or PM2'), it is possible to find the path metric of the survival path in state S1. Thus, when the last tap is not selected, it is possible to reduce the number of path metric calculations-that is, the number of branch metric additions-compared with the case where complex multiplications are performed for all taps.

Thus, when selection signal X4 is not output from the tap selection section 104, the computation control section 601 controls the operation of the comparison/selection section 111 and path metric computation section 110 so that, after the comparison/selection section 111 has selected a new survival path using the path metric of the survival path at immediately preceding control timing T', the path metric computation section 110 finds the path metric of the new survival path at current control timing T.

To be specific, when selection signal X4 is not output from the tap selection section 104, the computation control section 601 first outputs to the comparison/selection section 111 a control signal that performs control so that comparison/selection is performed for PM1' and PM2'. In accordance with this control, the comparison/selection section 111 compares PM1' and PM2', and selects the path metric with the smaller value. Here, it is assumed that PM1' is selected. The comparison/selection section 111 outputs the selected path metric (PM1') and the number of the state for which that path metric was found (S1') to the path metric computation section 110.

Next, the computation control section 601 outputs to the path metric computation section 110 a control signal that performs control so that the new path metric PM1A in state S1 is found using PM1' and BM11, and PM1B is not found. In accordance with this control, the path metric computation section 110 does not find PM1B after finding PM1A, but holds the found PM1A directly as the path metric of the new survival path, and outputs the found PM1A to the comparison/selection section 111.

In the case, also, where a plurality of taps in succession from the last tap have not been selected in the replica generating section 105, the number of branch metric additions can be reduced by having the computation control section 601 control the path metric computation section 110 and comparison/selection section 111 by means of the same kinds of operations as described above.

Thus, according to an adaptive equalization apparatus and adaptive equalization method of this embodiment, when the last tap is not selected or a plurality of taps in succession from the last tap are not selected in the replica generating section, a new survival path is found by performing comparison/selection using the path metric of the survival path at the control timing immediately preceding the current control timing, and then the path metric is found for that new survival path at the current control timing. Consequently, the number of path metric calculations-that is , the number of branch metric additions-can be reduced. Therefore, according to an adaptive equalization apparatus and adaptive equalization method of this embodiment, the amount of computation in adaptive equalization processing can be further reduced compared with Embodiment 1.

### (Embodiment 4)

In an adaptive equalization apparatus according to Embodiment 4 of the present invention, a tap selection section selects a tap based on a predetermined impulse response threshold value.

The configuration of an adaptive equalization apparatus according to this embodiment is identical to the configuration of the adaptive equalization apparatus of Embodiment 1 shown in FIG. 1, and therefore the adaptive equalization apparatus according to this embodiment will be described using FIG.1.

Selection methods that can be used by the tap selection section 104 include, in addition to 1) a method whereby up to a predetermined number are selected in order starting from the one with the greatest impulse response from among calculated impulse responses, 2) a method whereby a predetermined threshold value is fixed for impulse responses, up to a predetermined number are selected in order starting from the one with the greatest impulse response, and one or a plurality are further selected if there are impulse responses equal to or exceeding the threshold value, 3) a method whereby a predetermined threshold value is fixed for impulse responses, and up to a predetermined number are selected in order starting from the one with the greatest impulse response from among impulse responses equal to or exceeding the threshold value (with the proviso that at least one is selected),
4) a method whereby a predetermined threshold value is fixed for the total size of impulse responses, and taps are selected in order starting from the one with the greatest impulse response until the total size of impulse responses exceeds the predetermined threshold value (with the proviso that at least one is selected), and 5) a method whereby a predetermined threshold value is fixed for the total size of impulse responses, and taps are selected in order starting from the one with the greatest impulse response until the total size of impulse responses exceeds the predetermined threshold value, or up to a predetermined number (with the proviso that at least one is selected).

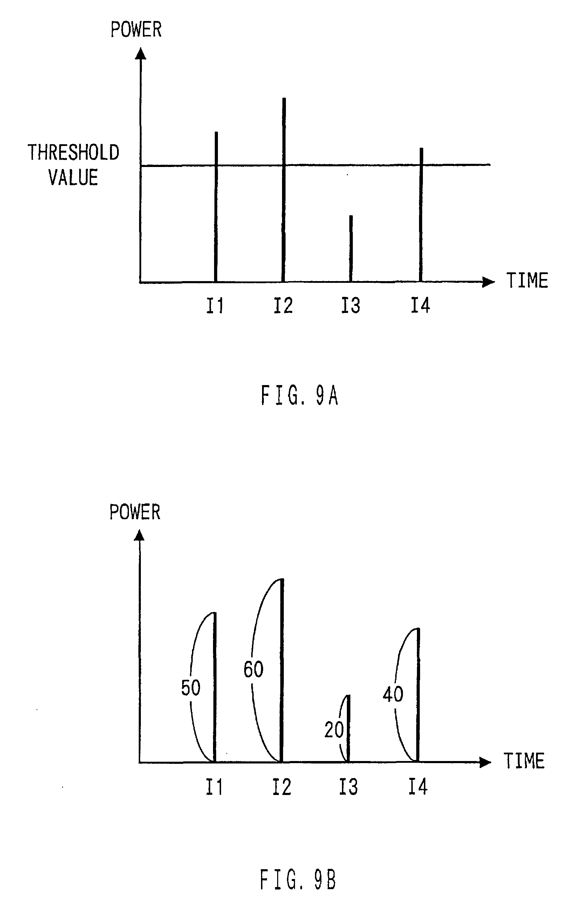

When selection method 2), 3), 4), or 5) is used, the actual procedure for selecting taps is as described below. FIG.9A and FIG.9B are charts showing impulse responses found by the impulse response calculating section provided in an adaptive equalization apparatus according to Embodiment 4 of the present invention.

According to above-described selection method 2), the tap selection section 104 selects up to a predetermined number of taps (here, for example, assumed to be two) in order starting from the one with the greatest impulse response, and further selects one or a plurality (here, for example, assumed to be one) if there are impulse responses equal to or exceeding the predetermined threshold value. Therefore, in the case of the impulse responses shown in FIG.9A, the tap selection section 104 selects I1 and I2, and then further selects I4.

Thus, when selection method 2) is used as the tap selection section 104 selection method, up to the predetermined number of impulse responses are first selected, starting from the greatest, regardless of the predetermined threshold value. In this regard, selection method 2) is the same as selection method 1).

However, with selection method 2), apart from the predetermined number of impulse responses, one or a plurality of impulse responses equal to or exceeding the predetermined threshold value are further selected. Thus, when selection method 2) is used, although the amount of computation is somewhat greater than in selection method 1), the reception characteristic can be improved.

According to above-described selection method 3), the tap selection section 104 selects up to a predetermined number of taps (here, for example, assumed to be three) in order starting from the one with the greatest impulse response from among impulse responses equal to or exceeding a predetermined threshold value. Therefore, in the case of the impulse responses shown in FIG.9A, the tap selection section 104 selects I1, I2, and I4.

Thus, when selection method 3) is used as the tap selection section 104 selection method, impulse responses smaller than the predetermined threshold value are no longer selected. In other words, a tap at which multiplication by a tap coefficient with a small power value is performed will not be selected. Therefore, it is possible to appropriately change the number of taps to be selected according to the power value of each tap coefficient. That is to say, the greater the number of tap coefficients with a small power value, the fewer can be made the number of taps to be selected.

Meanwhile, even though a tap at which multiplication by a tap coefficient with a small power value is performed is not selected, since the power value of a tap coefficient used in multiplication at a tap that is not selected is small to begin with, reception characteristic degradation is comparatively small. Thus, when selection method 3) is used, it is possible to suppress reception characteristic degradation and reduce the average amount of computation in a predetermined interval.

According to above-described selection method 4), the tap selection section 104 selects taps in order starting from the one with the greatest impulse response until the total size of impulse responses exceeds a predetermined threshold value (here, for example, assumed to be 140). Therefore, in the case of the impulse responses shown in FIG.9B, the tap selection section 104 selects I1, I2, and I4.

Thus, when selection method 4) is used as the tap selection section 104 selection method, taps are selected so that the total power of impulse responses is virtually constant. That is to say, the smaller the power of each impulse response, the greater is the number of taps selected. Therefore, when selection method 4) is used, the reception characteristic can be improved compared with selection method 1) even if the power of each impulse response is comparatively small.

Also, when selection method 4) is used, the greater the power of each impulse response, the smaller is the number of taps selected. Therefore, when selection method 4) is used, the average amount of computation in a predetermined interval can be reduced compared with selection method 1) when the power of each impulse response is comparatively large.

According to above-described selection method 5), the tap selection section 104 selects taps in order starting from the one with the greatest impulse response until the total size of impulse responses exceeds a predetermined threshold value (here, for example, assumed to be 140), or up to a predetermined number (here, for example, assumed to be two). Therefore, in the case of the impulse responses shown in FIG.9B, the tap selection section 104 selects I1 and I2.

Thus, when selection method 5) is used as the tap selection section 104 selection method, the number of taps to be selected can be kept within a predetermined number. Therefore, when selection method 5) is used, the amount of computation can be reduced compared with selection method 4).

Which of selection methods 1) to 5) is to be used is determined as appropriate from the viewpoint of achieving a balance between the required reception characteristic and permissible amount of computation. The predetermined threshold values and number of taps to be selected, also, are determined as appropriate from the viewpoint of achieving a balance between the required reception characteristic and permissible amount of computation.

Thus, according to an adaptive equalization apparatus and adaptive equalization method of this embodiment, the number of taps selected varies according to the size of a predetermined threshold value, allowing flexible apparatus design that takes account of a balance between the reception characteristic and amount of computation.

### (Embodiment 5)

An adaptive equalization apparatus according to Embodiment 5 of the present invention operates by switching as appropriate between adaptive equalization processing according to Embodiment 1 and adaptive equalization processing by means of DDFSE.

From the simulation results shown in FIG.5, it can be seen that in a range in which Eb/N0 is smaller than the vicinity of 1 [dB] the reception characteristic of an adaptive equalization apparatus according to Embodiment 1 is better than the reception characteristic of a DDFSE adaptive equalization apparatus, and conversely, in a range in which Eb/N0 is larger than the vicinity of 1 [dB] the reception characteristic of a DDFSE adaptive equalization apparatus is better than the reception characteristic of an adaptive equalization apparatus according to Embodiment 1. That is to say, if adaptive equalization processing is performed using an adaptive equalization apparatus according to Embodiment 1 in a range in which the noise level is comparatively high, and adaptive equalization processing is performed using a DDFSE adaptive equalization apparatus in a range in which the noise level is comparatively low, the reception characteristic can be improved compared with the case where adaptive equalization processing is performed using the respective adaptive equalization apparatuses independently.

Thus, in an adaptive equalization apparatus according to this embodiment, adaptive equalization processing is performed by switching as appropriate between adaptive equalization processing according to Embodiment 1 and adaptive equalization processing by means of DDFSE.

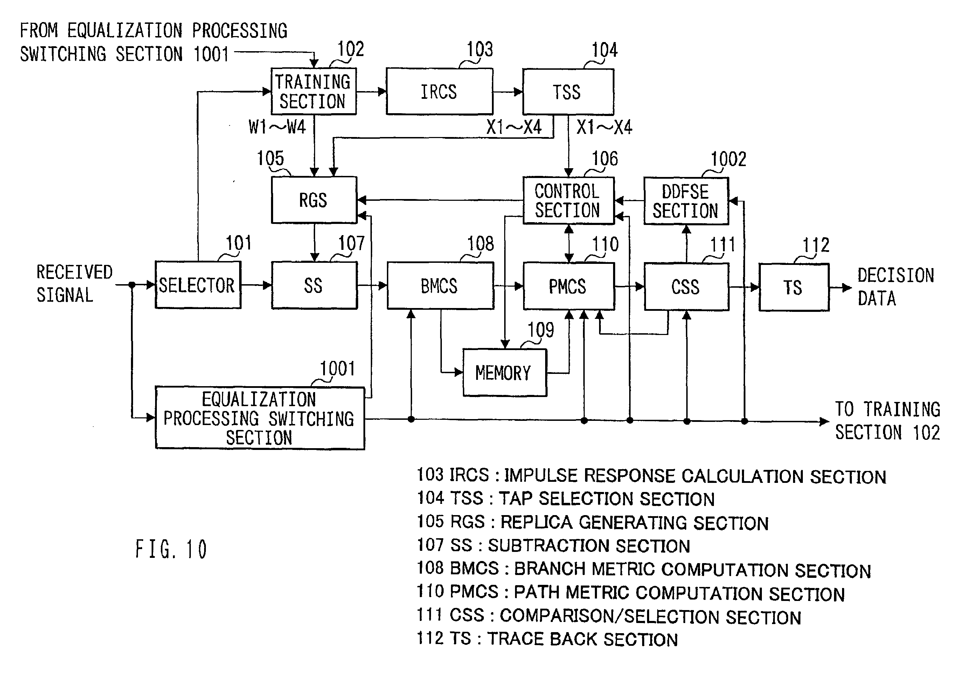

FIG.10 is a main block diagram showing a schematic configuration of an adaptive equalization apparatus according to Embodiment 5 of the present invention. The parts in FIG.10 identical to those in the adaptive equalization apparatus according to Embodiment 1 shown in FIG.1 are assigned the same codes as in FIG.1 and their detailed explanations are omitted.

In FIG.10, an equalization processing switching section 1001 decides whether to perform adaptive equalization processing according to Embodiment 1 or adaptive equalization processing by means of DDFSE according to a predetermined condition, and performs switching control to switch as appropriate between these two kinds of processing. A DDFSE section 1002 performs adaptive equalization processing by means of DDFSE in accordance with switching control by the equalization processing switching section 1001.

Next, The operation of an adaptive equalization apparatus that has the above-described configuration will be described. First, the equalization processing switching section 1001 decides whether to perform adaptive equalization processing according to Embodiment 1 or adaptive equalization processing by means of DDFSE according to a predetermined condition. An example of the actual process for deciding which kind of adaptive equalization processing is to be performed is given below.

The equalization processing switching section 1001 decides which kind of adaptive equalization processing is to be performed by comparing the noise level of a received signal with a preset predetermined noise level threshold value. That is, the equalization processing switching section 1001 measures the noise level of the received signal, and decides to perform adaptive equalization processing according to Embodiment 1 when the measured level is equal to or greater than a predetermined threshold value, or to perform adaptive equalization processing by means of DDFSE when the measured level is smaller than the predetermined threshold value. For the predetermined noise level threshold value, the optimum value for a switchover point is found beforehand by means of simulation or the like. Switching of adaptive equalization processing is not limited to being performed based on a noise level threshold value, and may also be performed based on other criteria.

The equalization processing switching section 1001 then outputs a signal showing the result of the decision to the training section 102, replica generating section 105, control section 106, branch metric computation section 108, path metric computation section 110, comparison/selection section 111, and DDFSE section 1002. If the equalization processing switching section 1001 decides that adaptive equalization processing according to Embodiment 1 is to be performed, the adaptive equalization apparatus according to this embodiment performs the same operations as the above-described adaptive equalization apparatus of Embodiment 1. Therefore, the following description applies to the case where the equalization processing switching section 1001 decides that adaptive equalization processing by means of DDFSE is to be performed.

Next, the training section 102 finds a tap coefficient using a training signal, and outputs it to the replica generating section 105 only. The impulse response calculation section 103 operates only when a tap coefficient is output from the training section 102,and the tap selection section 104 operates only when an impulse response is output from the impulse response calculation section 103. Thus, the impulse response calculation section 103 and tap selection section 104 do not operate if a training signal is output only to the replica generating section 105.

The replica generating section 105 then performs complex multiplications for all taps and generates a replica, and the subtraction section 107 finds an error signal. The branch metric computation section 108 then calculates a branch metric from the error signal, and outputs the calculated branch metric and the path number of that branch metric to the path metric computation section 110 only. That is to say, when adaptive equalization processing by means of DDFSE is performed, the memory 109 is not used.

Next, the path metric computation section 110 adds the path metric of the survival path at the immediately preceding timing and the branch metric output from the branch metric computation section 108, and finds a new path metric for the path of this branch metric. Then the path metric computation section 110 outputs this new path metric to the comparison/selection section 111. At the point at which this new path metric is calculated, the path metric computation section 110 outputs a signal indicating that calculation of this new path metric has finished to the control section 106. Based on this signal, the control section 106 directs the replica generating section 105 to generate the next replica. The above operations are carried out for all paths.

When path metrics have been found for all paths, the comparison/selection section 111 compares the path metrics in each state. Then the comparison/selection section 111 selects the path with the smaller value as the survival path in each state, outputs the state number and path metric of the survival path to the path metric computation section 110, and also outputs the state number and path number to the DDFSE section 1002 and trace-back section 112. State numbers and path numbers are held in the trace-back section 112 as a sequential time series until a predetermined timing is reached.

Next, the DDFSE section 1002 decides the path for which a replica is to be generated next by means of DDFSE using the state number and survival path's path number output from the comparison/selection section 111, and outputs a signal indicating that path to the control section 106. The control section 106 then controls the replica generating section 105 so that replica generation is performed for the path indicated by the signal output from the DDFSE section 1002.

Then, at the predetermined timing, the trace-back section 112 selects from among the survival paths in each state the one for which the path metric is the smallest, and performs trace-back of that selected path. By this means, decision data is obtained.

In this embodiment the configuration provides for common use of the training section 102, replica generating section 105, control section 106, subtraction section 107, branch metric computation section 108, path metric computation section 110, comparison/selection section 111, and trace-back section 112 when performing adaptive equalization processing by means of DDFSE and when performing adaptive equalization processing according to Embodiment 1. However, a configuration is also possible whereby a DDFSE adaptive equalization apparatus equipped with these parts is provided separately from an adaptive equalization apparatus according to Embodiment 1, and these two adaptive equalization apparatuses are used by being switched to as appropriate.

Thus, according to an adaptive equalization apparatus and adaptive equalization method of this embodiment, switching is performed as appropriate between adaptive equalization processing according to Embodiment 1 and adaptive equalization processing by means of DDFSE, whereby the reception characteristic can be improved compared with the case where adaptive equalization processing is performed using the respective adaptive equalization apparatuses independently.

### (Embodiment 6)

An adaptive equalization apparatus according to Embodiment 6 of the present invention combines an adaptive equalization apparatus according to Embodiment 1 with a DDFSE adaptive equalization apparatus, and determines decision data based on results of CRC (Cyclic Redundancy Check) on data, or the like, output from the two adaptive equalization apparatuses.

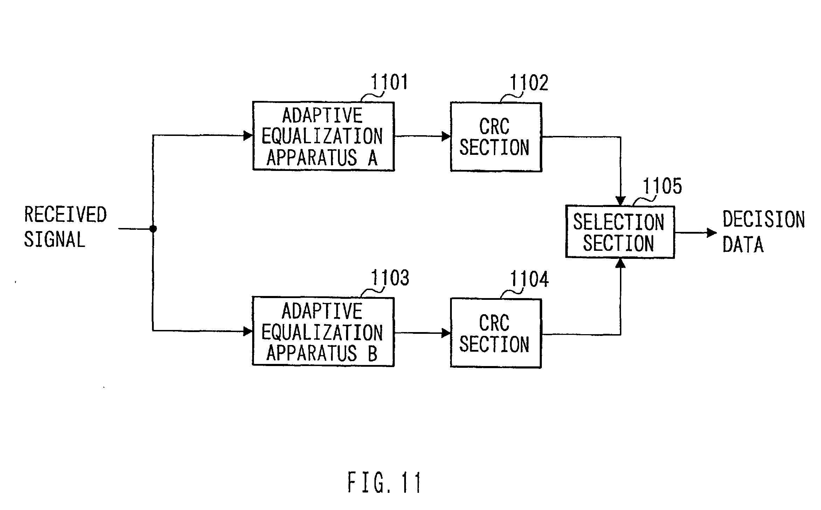

FIG.11 is a main block diagram showing a schematic configuration of an adaptive equalization apparatus according to Embodiment 6 of the present invention. In FIG.11, adaptive equalization apparatus A 1101 is an adaptive equalization apparatus according to Embodiment 1, and adaptive equalization apparatus B 1103 is identical to the part that performs adaptive equalization processing by means of DDFSE within the above-described adaptive equalization apparatus according to Embodiment 5. Also, the operation of adaptive equalization apparatus A 1101 is the same as that described in Embodiment 1 above, and the operation of adaptive equalization apparatus B 1103 is the same as that described in Embodiment 5 above. Therefore, descriptions of the operation of adaptive equalization apparatus A 1101 and adaptive equalization apparatus B 1103 will be omitted here.

CRC section 1102 performs CRC decoding on data A output from adaptive equalization apparatus A 1101, and outputs data A together with the CRC result to a selection section 1105. Meanwhile, CRC section 1104 performs CRC decoding on data B output from adaptive equalization apparatus B 1103, and outputs data B together with the CRC result to the selection section 1105.

The selection section 1105 selects whichever of data A output from CRC section 1102 and data B output from CRC section 1104 has a CRC result of 0 (that is, whichever is error-free) as the final decision data. If the CRC results for both data A and data B are the same, a predetermined one of the two sets of data is selected as the decision data.

A possible case in which the CRC results of both data A and data B are 1 (indicating the presence of an error) is in a range in which the received signal noise level is comparatively high (for example, the range in which Eb/N0 is smaller than the vicinity of 1 [dB] in the simulation results shown in FIG.5). Also, as explained in above-described Embodiment 5, within a range in which the received signal noise level is comparatively high, an adaptive equalization apparatus according to Embodiment 1 has a better reception characteristic than a DDFSE adaptive equalization apparatus. Therefore, a configuration may be used whereby, if the CRC results of both data A and data B are 1 (indicating the presence of an error), the selection section 1105 selects data A output from adaptive equalization apparatus A 1101 as decision data.

In this embodiment, a configuration is used whereby decision data is determined based on CRC results. However, the error checking method used on data A and data B is not limited to CRC, and error checking may also be carried out using a different error checking method.

Thus, according to an adaptive equalization apparatus and adaptive equalization method of this embodiment, an adaptive equalization apparatus according to Embodiment 1 and a DDFSE adaptive equalization apparatus are both provided, and decision data is determined based CRC results on data, or the like, output from the two adaptive equalization apparatuses, thereby enabling the reception characteristic to be improved compared with the case where adaptive equalization processing is performed using the respective apparatuses independently.

Also, in above-described Embodiment 6, a configuration can also be used whereby a control section is provided separately, and this control section controls the operation of adaptive equalization apparatus A 1101 and adaptive equalization apparatus B 1103 in the following way according to the received signal noise level.

Within a range in which the received signal noise level is comparatively high, the control section operates adaptive equalization apparatus A 1101 but does not operate adaptive equalization apparatus B 1103. On the other hand, within a range in which the received signal noise level is comparatively low (for example, the range in which Eb/N0 is greater than the vicinity of 1 [dB] in the simulation results shown in FIG.5), the control section operates both adaptive equalization apparatus A 1101 and adaptive equalization apparatus B 1103.

Thus, within a range in which the received signal noise level is comparatively high, data A output from adaptive equalization apparatus A 1101 becomes decision data directly. On the other hand, within a range in which the received signal noise level is comparatively low, whichever of data A output from adaptive equalization apparatus A 1101 and data B output from adaptive equalization apparatus B 1103 has a CRC result of 0 (that is, whichever is error-free) is selected as the final decision data by the selection section 1105. By executing control in this way, the reception characteristic can be further improved compared with Embodiment 5.

Also, above-described Embodiments 1 to 4 can be implemented in combination as appropriate. When combined implementation is used, the amount of computation can be further reduced.

Moreover, adaptive equalization apparatuses according to above-described Embodiments 1 to 6 can be applied to a radio receiving apparatus. Furthermore, a radio receiving apparatus provided with an adaptive equalization apparatus according to above-described Embodiments 1 to 6 can be applied to a base station apparatus used in a radio communication system, or a communication terminal apparatus such as a mobile station apparatus that carries out radio communication with this base station apparatus.

As described above, according to the present invention it is possible to reduce the amount of computation and the scale of an apparatus, thereby enabling an adaptive equalization apparatus actually to be implemented as hardware even when the length of the delay time subject to compensation and the modulation level are large.

This application is based on Japanese Patent Application No.2000-059517 filed on March 3, 2000, and Japanese Patent Application No.2000-108318 filed on April 10, 2000, entire content of which is expressly incorporated by reference herein.

## Claims

1. An adaptive equalization apparatus comprising:
a coefficient calculator for calculating weighting coefficients;
a generator for multiplying symbols for replica generation by the weighting coefficients at a plurality of taps to generate a replica; and
a selector for selecting a tap at which the multiplication is to be performed from among the plurality of taps based on the weighting coefficient;
wherein said generator performs the multiplication only at the tap selected by said selector.

2. The adaptive equalization apparatus according to claim 1, wherein the generator performs generation so as not to duplicate replicas that are the same, based on a tap selected by said selector.

3. The adaptive equalization apparatus according to claim 1, further comprising a first calculator for performing calculation so as not to duplicate path metrics that are the same when the first tap is not selected by said selector.

4. The adaptive equalization apparatus according to claim 3, wherein said first calculator operates so as not to duplicate compare/select operations for which the results of path metric comparison/selection are the same.

5. The adaptive equalization apparatus according to claim 1, further comprising a second calculator for performing comparison/selection on path metrics selected in the control unit immediately preceding the current control unit, and thereafter calculating a path metric in the current control unit using the selected path metric, when the last tap is not selected by the selector.

6. The adaptive equalization apparatus according to claim 1, wherein said selector selects the tap based on the size of a impulse response of the weighting coefficient.

7. The adaptive equalization apparatus according to claim 6, wherein the selector selects the impulse response up to a predetermined number in order from the greatest, and selects the tap at which the weighting coefficient corresponding to the selected impulse response is multiplied.

8. The adaptive equalization apparatus according to claim 6, wherein the selector selects the impulse response greater than a predetermined threshold value up to a predetermined number, and selects the tap at which the weighting coefficient corresponding to the selected impulse response is multiplied.

9. The adaptive equalization apparatus according to claim 6, wherein the selector selects the impulse response up to a predetermined number in order from the greatest, and thereafter further selects impulse responses greater than a predetermined threshold value up to a predetermined number, and selects the tap at which the weighting coefficient corresponding to the selected impulse response is multiplied.

10. The adaptive equalization apparatus according to claim 6, wherein the selector selects the impulse response in order from the greatest until the total size of impulse responses exceeds a predetermined threshold value, and selects the tap at which the weighting coefficient corresponding to the selected impulse response is multiplied.

11. The adaptive equalization apparatus according to claim 6, wherein the selector selects the impulse response in order from the greatest until the total size of impulse responses exceeds a predetermined threshold value, or up to a predetermined number, and selects the tap at which the weighting coefficient corresponding to the selected impulse response is multiplied.

12. The adaptive equalization apparatus according to claim 1, further comprising:
a DDFSE apparatus for performing adaptive equalization processing by means of DDFSE; and
an operation controller for operating said DDFSE apparatus according to a predetermined condition.

13. A radio receiving apparatus equipped with the adaptive equalization apparatus according to claim 1.

14. A communication terminal apparatus equipped with the radio receiving apparatus according to claim 13.

15. A base station apparatus equipped with the radio receiving apparatus according to claim 13.

16. A radio receiving apparatus equipped with the adaptive equalization apparatus according to claim 1 and a DDFSE adaptive equalization apparatus, wherein said adaptive equalization apparatus and said DDFSE adaptive equalization apparatus are used by being switched to as appropriate according to a predetermined condition.

17. A communication terminal apparatus equipped with the radio receiving apparatus according to claim 16.

18. A base station apparatus equipped with the radio receiving apparatus according to claim 16.

19. A radio receiving apparatus equipped with the adaptive equalization apparatus according to claim 1 and a DDFSE adaptive equalization apparatus, wherein one or other of first data output from said adaptive equalization apparatus and second data output from said DDFSE adaptive equalization apparatus is selected and used as decision data.

20. The radio receiving apparatus according to claim 19, wherein the first data output from said adaptive equalization apparatus is used directly as decision data according to a predetermined condition.

21. A communication terminal apparatus equipped with the radio receiving apparatus according to claim 19.

22. A base station apparatus equipped with the radio receiving apparatus according to claim 19.

23. An adaptive equalization method comprising:
a coefficient calculating step of calculating weighting coefficients;
a generating step of multiplying symbols for replica generation by the weighting coefficients at a plurality of taps to generate a replica; and
a selecting step of selecting a tap at which the multiplication is to be performed from among the plurality of taps based on the weighting coefficient;
wherein, in said generating step, the multiplication is performed only for the tap selected by said selecting step.

24. The adaptive equalization method according to claim 23, wherein, in said generating step, generation is performed so as not to duplicate replicas that are the same, based on a tap selected in said selecting step.
